# DEMANDE DE BREVET EUROPEEN

(11) **EP 3 104 534 A1**
(43) Date de publication de la demande: **14.12.2016**
(21) Numéro de dépôt: 16174245.7
(22) Date de dépôt: 13.06.2016
(51) Int. Cl.: H04B 7/155, H04W 40/12, H04W 84/18, H04L 12/721

(54) **PROCÉDÉ DE CORRECTION LOCALE DU CHEMIN DE ROUTAGE DANS UN RÉSEAU AD HOC ET RÉSEAU AD HOC ASSOCIÉ**

(30) Priorité: 12.06.2015 FR 1501223
(71) Demandeur: THALES, 92400 Courbevoie (FR)
(72) Inventeur: KHALIFE, Hicham, 92622 GENNEVILLIERS CEDEX (FR); ANOUAR, Hicham, 92622 GENNEVILLIERS CEDEX (FR); PIREZ, Didier, 92622 GENNEVILLIERS CEDEX (FR); CONAN, Vania, 92622 GENNEVILLIERS CEDEX (FR); SEDDAR, Jawad, 92622 GENNEVILLIERS CEDEX (FR)
(74) Mandataire: Lavoix

(57) **Abrégé**

Ce procédé, exécuté dans un groupe de noeuds du réseaux ad hoc (1) comportant une source (10), des premier et second relais (11, 12) et un destinataire (13), les relais étant voisins de la source, le destinataire étant voisin des relais, la source ayant des données utiles à retransmettre vers un destinataire final (15) par un chemin de routage passant par le premier relais (11), puis le destinataire (13), consiste à : calculer une première grandeur caractéristique d'un chemin élémentaire entre la source (10) et le destinataire (13), via le premier relais (11) et une seconde grandeur caractéristique d'un chemin élémentaire entre la source (10) et le destinataire (13), via le second relais (11) ; vérifier le respect d'un critère pour la première grandeur caractéristique ; et, en cas de vérification négative, utiliser le second relais (12) pour relayer les données utiles de la source (10), vers le destinataire (13).

## Description

La présente invention concerne un procédé de correction locale du chemin de routage dans un réseau ad hoc.

Un noeud d'un tel réseau est à la fois noeud terminal, c'est-à-dire source initiale ou destinataire final d'un message de données, ou noeud intermédiaire pour la réception et la retransmission d'un message de données le long d'un chemin de routage entre une source initiale et un destinataire final du message de données.

Dans un tel réseau, un noeud est considéré comme voisin d'un autre noeud lorsqu'ils sont suffisamment proches pour qu'une liaison de communication puisse être établie. Dans ce qui suit, les noeuds voisins d'un noeud sont dits noeuds de rang un de ce noeud, et les noeuds voisins des noeuds de rang un de ce noeud sont dits noeuds de rang deux de ce noeud. Ainsi, depuis le noeud considéré, un noeud de rang un est accessible par au moins un saut, ou bond (« hop » en anglais), tandis qu'un noeud de rang deux est accessible par au moins deux sauts.

Un réseau ad hoc est un réseau dont la topologie peut évoluer au cours du temps, avec le déplacement des noeuds les uns par rapport aux autres et la modification des liaisons entre noeuds.

Une table de routage, permettant aux noeuds de partager une même vision du réseau et à chaque noeud de savoir vers quel noeud voisin retransmettre un message de données pour que ce dernier soit acheminé de proche en proche vers un destinataire final, doit être mise à jour régulièrement pour tenir compte de l'évolution de la topologie.

Pour ce faire, les noeuds émettent régulièrement des signaux de signalisation. Un tel signal comporte notamment un identifiant unique du noeud émetteur sur le réseau. Les signaux de signalisation reçus par un noeud permettent à ce dernier de connaître les noeuds qui, à l'instant courant, se situent dans son voisinage.

Ces informations de voisinage à un saut d'un noeud sont, dans un type particulier de routage, transmises à un noeud central du réseau qui est relié à un dispositif capable de déterminer la topologie du réseau et, à partir de celle-ci, de construire une table de routage générale. Celle-ci définit, pour chaque paire de noeuds constituée d'un noeud source initial et d'un noeud destinataire final, le chemin de routage unique que doit suivre un message de données à travers le réseau, c'est-à-dire la liste ordonnée des noeuds intermédiaires permettant d'acheminer un message de données entre le noeud source initial et le noeud destinataire final. Le dispositif génère ensuite une table de routage locale, spécifique d'un noeud particulier, et qui indique l'identifiant du noeud voisin à qui le noeud considéré doit retransmettre un message de données adressé à un noeud destinataire final. La table de routage locale d'un noeud associe donc l'identifiant d'un destinataire final à l'identifiant d'un noeud de rang un. Les tables de routage locales sont ensuite transmises à chacun des noeuds du réseau.

D'autres types de routage sont connus de l'homme du métier. Cependant, de manière générale pour tous les types de routage, la mise à jour de la table de routage locale d'un noeud nécessite un temps important entre la détermination du voisinage de ce noeud, le partage d'un changement de voisinage avec les autres noeuds du réseau pour que les noeuds aient la même vision du réseau, et la définition d'une table de routage locale pour le noeud considéré, lui permettant de réémettre convenablement les messages. Ce temps augmente notamment en fonction du nombre de noeuds constituant le réseau. Ainsi, il est possible que la table de routage locale une fois à disposition d'un noeud ne corresponde plus exactement à la topologie du réseau autour de ce noeud à l'instant courant.

Par exemple un noeud peut être sorti du voisinage du noeud considéré. Cela conduit à une rupture de la communication vers les noeuds destinataires finaux associés à ce noeud de rang un, dans la table de routage locale. Par exemple encore, la qualité de la communication avec un noeud de rang un peut être dégradée, ce noeud voisin étant momentanément masqué. Cela conduit à une baisse de la qualité de la communication vers les noeuds destinataires finaux associés à ce noeud de rang un, dans la table de routage locale. Il est alors nécessaire de répéter la transmission du message de données et par conséquent de perdre en bande passante.

Mais, la table de routage ne peut être mise à jour avec une fréquence trop basse. En effet, la quantité de messages de signalisation circulant sur le réseau afin que les noeuds puissent partager une vision commune de la topologie du réseau réduit d'autant la bande passante pour les messages de données.

Le but de l'invention est donc de pallier ce problème de latence dans la mise à jour des informations de routage utilisées par un noeud.

L'invention a donc pour objet un procédé de correction locale du chemin de routage dans un réseau ad hoc comportant une pluralité de noeuds, chaque noeud comportant des moyens émetteurs-récepteurs propres à recevoir et émettre des messages de données, les noeuds communiquant entre eux par l'envoi de signaux correspondant auxdits messages de données dans des créneaux temporels organisés en trames, les trames étant synchronisée à travers le réseau ad hoc, un routage des messages de données étant effectué à travers le réseau ad hoc sur la base d'une table de routage définissant un chemin de routage pour la communication entre chaque paire de noeud du réseau, caractérisé en ce que ledit procédé est mis en oeuvre dans un groupe de noeuds du réseaux ad hoc comportant un noeud source, au moins des premier et second noeuds relais, et un noeud destinataire, les premier et second noeuds relais étant voisins du noeud source, le noeud destinataire étant voisin des premier et second noeuds relais mais n'étant pas voisin du noeud source, le noeud source ayant des données utiles à retransmettre vers un destinataire final et la table de routage indiquant que le chemin de routage correspondant passe par le premier noeud relais, puis par le noeud destinataire, et en ce que ledit procédé comportant les étapes de :
- calcul, par le noeud source, d'une grandeur caractéristique d'un chemin élémentaire entre le noeud source et le noeud destinataire, via le premier noeud relais et d'une grandeur caractéristique d'un chemin élémentaire entre le noeud source et le noeud destinataire via le second noeud relais ;
- vérification, par le noeud source, du respect d'un critère prédéterminé pour ladite grandeur caractéristique du chemin élémentaire entre le noeud source et le noeud destinataire, via le premier noeud relais ; et, en cas de vérification négative,
- utilisation du second noeud relais pour relayer le message de données du noeud source, vers le noeud destinataire.

L'invention résout le problème de latence mentionné ci-dessus, en proposant un mécanisme de correction locale du chemin de routage permettant une prise en compte par un noeud de toute modification de son voisinage à un saut.

Suivant des modes de réalisation particuliers, le procédé comporte une ou plusieurs des caractéristiques suivantes, prises isolément ou suivant toutes les combinaisons techniquement possibles :
- au cours d'un créneau de signalisation de chaque trame, chaque noeud a la possibilité d'émettre un message de signalisation comportant des informations de signalisation, les informations de signalisation permettant à chaque noeud de déterminer ses noeuds voisins de rang un, une qualité de liaison avec chacun de ses noeuds voisins de rang un, ses noeuds voisins de rang deux, et une qualité de liaison entre un noeud voisins de rang un et un noeud voisin de rang deux, les qualités de liaison permettant, dans l'étape de calcul, à un noeud source de déterminer une qualité de communication.
- l'étape d'utilisation du second noeud relais consiste à relayer les données utiles vers le noeud destinataire à la fois par le chemin élémentaire entre le noeud source et le noeud destinataire, via le premier noeud relais, et par le chemin élémentaire entre le noeud source et le noeud destinataire, via le second noeud relais.
- l'étape d'utilisation du second noeud relais met en oeuvre un mode de fonctionnement en formation de faisceau, dans lequel des premier et second messages de communication relais, émis respectivement par les premier et second noeuds relais, interfèrent de manière constructive au niveau du noeud destinataire, au moins dans leurs portions respectives de charge utile comportant les données utiles à retransmettre, les premier et second messages de communication relais étant émis pendant un créneau de communication relais dédié de la trame.
- le noeud destinataire mesure une phase d'un signal émis par un noeud relais à partir d'un motif, caractéristique du noeud relais émetteur, prévus dans une portion d'en-tête du message de communication relais ; choisi l'un des noeuds relais en tant que noeuds relais maître ; calcule pour chacun des autres noeuds relais, dits esclaves, un déphasage résultant de la différence entre la phase mesurée pour le noeud relais esclave considéré et la phase mesurée pour le noeud relais maître ; et transmet le déphasage calculé vers le noeud relais esclave correspondant dans un message d'ajustement émis dans un créneau d'ajustement dédié de la trame, et un noeud relais ayant reçu un message d'ajustement ajuste une phase de ses moyens d'émission-réception de manière à annuler le déphasage indiqué dans ledit message d'ajustement.
- chaque noeud relais est propre à calculer une dérive en fréquence de ses moyens d'émission-réception à partir du déphasage contenu dans une succession de messages d'ajustement émis par un même noeud destinataire et à ajuster la fréquence de ses moyens d'émission-réception de manière à corriger ladite dérive en fréquence, au moins au cours du créneau de communication relais pour la transmission d'un message de communication relais vers ledit noeud destinataire.
- la grandeur caractéristique étant une qualité de communication le long d'un chemin élémentaire, le critère prédéterminé consiste à vérifier que la grandeur caractéristique du chemin élémentaire entre le noeud source et le noeud destinataire, via le premier noeud relais, qui est le noeud relais indiqué par la table de routage, est supérieure à la grandeur caractéristique du chemin élémentaire entre le noeud source et le noeud destinataire, via le second noeud relais, l'étape d'utilisation du second noeud relais consistant à relayer les données utiles vers le noeud destinataire uniquement par le second noeud relais, en substitution du premier noeud relais.

L'invention a également pour objet un réseau ad hoc comportant une pluralité de noeuds propres à recevoir et à émettre des messages de données et communiquant entre eux par l'envoi de signaux dans des créneaux temporels organisés en trames, caractérisé en ce que chaque noeud comporte des moyens pour la mise en oeuvre du procédé précédent.

Suivant des modes de réalisation particuliers, le réseau comporte une ou plusieurs des caractéristiques suivantes, prises isolément ou suivant toutes les combinaisons techniquement possibles :
- les trames comportent : Un créneau de signalisation, permettant à chaque noeud d'émettre un signal de signalisation comportant des informations de signalisation, les informations de signalisation permettant à chaque noeud de déterminer ses noeuds voisins de rang un, une qualité de liaison avec chacun de ses noeuds voisins de rang un, ses noeuds voisins de rang deux, et une qualité de liaison entre chaque noeud de rang un et chaque noeud de rang deux ; Un créneau de communication source, permettant à un noeud fonctionnant en tant que noeud source d'émettre un message de communication source vers un noeud de rang un fonctionnant en tant que noeud relais, le message de communication source comportant les données utiles à transmettre vers un destinataire final ; Un créneau de communication relais, permettant à un noeud fonctionnant en noeud relais d'émettre un message de communication relais vers un noeud destinataire, le message de communication relais comportant une portion d'en-tête intégrant un motif, caractéristique du noeud relais émetteur, permettant au noeud destinataire de calculer une phase du signal correspondant au message de communication relais, et une portion de charge utile comportant les données utiles à relayer vers le noeud destinataire; Et un créneau d'ajustement, permettant à au noeud fonctionnant en noeud destinataire d'émettre un message d'ajustement vers un noeud relais d'un ensemble de noeuds relais utilisés dans un mode de formation de faisceau, le message d'ajustement comportant un déphasage.
- chaque noeud destinataire d'une pluralité de messages de communication relais émis par des noeuds relais d'un ensemble de noeuds relais utilisés dans un mode de formation de faisceau, est propre à calculer une phase pour chacun desdits noeuds relais à partir du signal correspondant au message de communication relais incident, à déterminer un déphasage entre au moins deux desdits noeuds relais et à transmettre le déphasage calculé à l'un desdits au moins deux noeuds relais, dans un message d'ajustement émis dans un créneaux d'ajustement dédié de la trame.
- chaque noeud fonctionnant en noeud relais est propre à estimer une dérive en fréquence de ses moyens d'émission-réception à partir du déphasage contenu dans une succession de messages d'ajustement émis par un même noeud destinataire et à ajuster ses moyens d'émission-réception pour corriger ladite dérive.
- la table de routage d'un noeud comporte, pour chaque destinataire de données utiles, le noeud voisin de rang un du noeud considéré et le noeud voisin de rang deux du noeud considéré le long du chemin de routage.

Les caractéristiques et avantages de l'invention apparaîtront à la lecture de la description qui va suivre, donnée uniquement à titre d'exemple, et faite en référence aux dessins annexés, sur lesquels :
- la figure 1 est une vue schématique d'un réseau ad hoc à un instant temporel donné ;
- la figure 2 est une représentation du format des trames de communications utilisées par le réseau de la figure 1 ; et,
- la figure 3 est un organigramme du procédé de correction du routage selon l'invention.

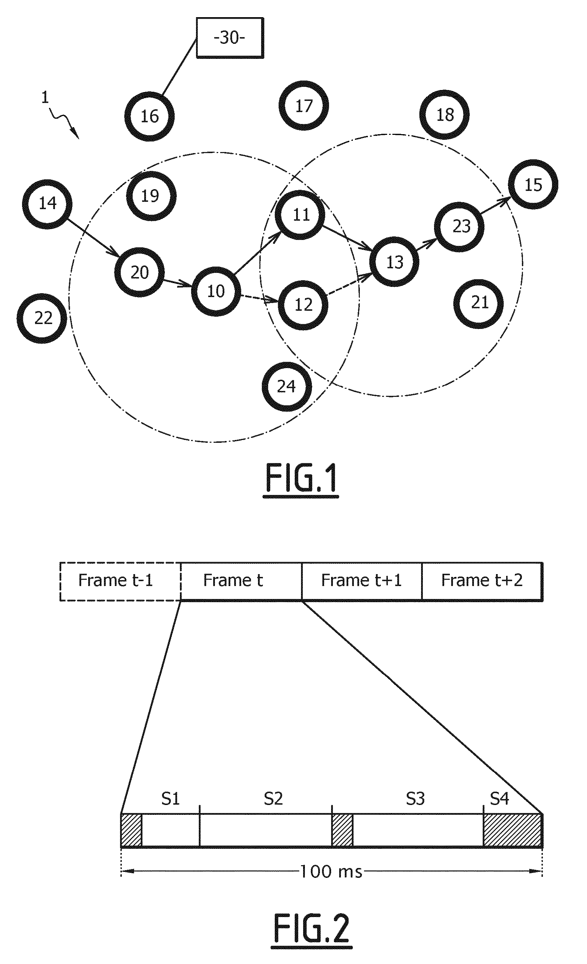

Le réseau 1 illustré sur la figure 1 est par exemple un réseau ad hoc de communication entre des individus sur un terrain d'opérations.

Chaque individu est équipé d'un émetteur-récepteur constituant un noeud du réseau.

Le réseau 1 illustré sur la figure 1 est composé de quinze noeuds référencés de 10 à 24. Les noeuds sont identiques entre eux.

De manière connue en soi, selon le modèle OSI, un noeud comporte notamment, une couche de liaison de données, dénommée dans ce qui suit couche MAC (selon l'acronyme anglais « Media Access Control » ou « de contrôle d'accès au support ») entre une couche physique et une couche de routage. Par couche, on entend l'ensemble des moyens matériels ou logiciels pour la mise en oeuvre de la fonction correspondante.

La couche MAC de chaque noeud comporte des moyens de communication pour recevoir et émettre des messages de données. Les messages de données sont transmis sous forme de signaux, par exemple radio, dans un canal donné. Les moyens de communication sont propres à ajuster la phase et la fréquence de ces signaux.

Le réseau 1 est un réseau à accès multiple à répartition dans le temps ou réseau TDMA pour « Time division multiple access ». Le temps est ainsi subdivisé en trames (« Frame_t » sur la figure 2) de durée constante, et chaque trame est elle-même subdivisée de manière prédéterminée en créneaux temporels (« slot » en anglais).

Les différents noeuds du réseau sont synchronisés entre eux, par exemple par un signal de synchronisation délivré par un système de positionnement par satellites. De cette manière, chaque noeud sait à quel créneau de la trame correspond l'instant courant.

Le noeud 16 est par exemple relié à un dispositif 30 propre à déterminer la topologie du réseau, à générer périodiquement une table de routage générale à partir de la topologie déterminée, et à la communiquer à chacun des noeuds du réseau une table de routage locale. Le routage et la manière d'obtenir une table de routage locale ne font pas partie de l'invention et d'autres types de routage peuvent être mis en oeuvre.

La couche de routage de chaque noeud mémorise ainsi une table de routage locale courante.

La table de routage générale permet de définir, entre chaque paire de noeuds constituée d'un noeud source initiale et d'un noeud destinataire final, un unique chemin de routage. Ainsi, entre le noeud 14, en tant que noeud source initiale, et le noeud 15, en tant que noeud destinataire final, la table de routage générale définit le chemin de routage indiqué par les flèches continues sur la figure 1. En particulier, entre les noeuds 10 et 13, le chemin de routage prévu passe par le noeud intermédiaire 11.

Dans la présente invention, la table de routage locale d'un noeud est telle qu'elle associe un identifiant d'un noeud destinataire final, à un identifiant d'un noeud de rang un et à un identifiant d'un noeud de rang deux. Par exemple, la table de routage locale du noeud 10, associe au noeud 15, le noeud 11 de rang un et le noeud 12 de rang deux.

Cependant, la table de routage locale n'est mise à jour qu'à une fréquence réduite par rapport aux déplacements des noeuds dans le réseau 1 et à la modification du voisinage du noeud considéré.

Par exemple, le noeud intermédiaire 12, qui, à l'instant considéré, se trouve dans le voisinage à un saut du noeud 10 peut servir de relais entre les noeuds 10 et 13, soit à la place du noeud intermédiaire 11 prévu par le routage, soit en plus du noeud intermédiaire 11 prévu par le routage.

Le procédé de correction du chemin de routage va permettre, au niveau de la couche MAC du réseau, l'utilisation de noeuds intermédiaires, autres que celui indiquer par le routage, pour relayer l'information entre un noeud source et un noeud destinataire, situé à deux sauts du noeud source le long du chemin de routage.

Le procédé de correction du routage est ainsi mis en oeuvre localement dans un groupe de noeud constitué :
- D'un noeud source, tel que le noeud 10, en tant que noeud source du message de données à retransmettre vers un noeud destinataire final, tel que le noeuds 15;
- D'un noeud destinataire, tel que le noeud 13, en tant que noeud vers lequel propager le message de données, situé à deux bonds du noeud source le long du chemin de routage vers le noeud destinataire final ;
- Au moins deux noeuds relais, tels que le premier noeud relais 11 et le second noeud relais 12, en tant que noeuds intermédiaires permettant de relayer le message de données entre le noeud source 10 et le noeud destinataire 13.

Le premier noeud relais 11 étant situé sur le chemin de routage tandis que le second noeud relais 12 est situé hors du chemin de routage.

Les noeuds relais 11 et 12 sont situés dans le voisinage du noeud source, 11, et dans celui du noeud destinataire 13, voisinages matérialisés par un cercle sur la figure 1.

En revanche, le noeud destinataire 13 ne se trouve pas dans le voisinage à un bond du noeud source 10, mais dans le voisinage à deux bonds du noeud source 10.

En variante, plus de deux noeuds relais se situent, à l'instant considéré, dans le voisinage du noeud source 10 et dans celui du noeud destinataire 13, et sont utilisés pour la correction du chemin de routage.

En se référant à la figure 2, le réseau 1 utilise des créneaux temporels pour transmettre les messages de données, ces créneaux étant répartis dans des trames.

La subdivision des trames en créneaux est constante d'une trame à l'autre. La durée de chaque créneau est constante d'une trame à l'autre. La durée des trames est par conséquent constante.

Chaque trame est décomposée en créneaux selon le format suivant : un créneau de signalisation S1 ; un créneau de communication source S2 ; un créneau de communication relais S3 ; et un créneau d'ajustement S4.

Au cours du créneau de signalisation S1, d'une durée de 15 ms par exemple, un noeud peut émettre un message de signalisation comportant des informations de signalisation.

Les informations de signalisation comportent un identifiant du noeud émetteur. Un noeud récepteur du message de signalisation est ainsi propre à déterminer l'ensemble des noeuds se trouvant dans son voisinage.

Les informations de signalisation comportent par exemple une séquence de Walsh ou l'équivalent, de manière à permettre à un noeud récepteur du message de signalisation de déterminer une qualité de la liaison avec le noeud émetteur. La qualité de la liaison est par exemple un rapport signal sur bruit (SNR) ou une puissance en réception du signal (RSSI pour « Received Signal Strength Indication ») ou toute grandeur mesurable par la couche MAC du noeud récepteur.

Les informations de signalisation comportent par exemple la qualité de la liaison entre le noeud émetteur et chacun de ses noeuds voisins. Ainsi, le noeud récepteur du message de signalisation connaît, pour chacun de ses noeuds voisins, la qualité de la liaison entre ce noeud voisin, et chacun des noeuds voisins de ce noeud voisin. C'est-à-dire que le noeud récepteur connaît la qualité de la liaison entre un noeud de rang un et un noeud de rang deux.

La couche MAC de chaque noeud tient ainsi à jour une liste associant à l'identifiant de chaque noeud de rang un, la qualité de la liaison avec ce noeud de rang un, ainsi que les identifiants de chaque noeud de rang deux, et la qualité de la liaison entre ce noeud de rang deux et le noeud de rang correspondant.

Pour chaque noeud de rang deux de la liste, la couche MAC d'un noeud est propre à calculer une qualité de la communication le long du chemin élémentaire entre le noeud considéré et ce noeud de rang deux via le noeud de rang un correspondant. Par exemple, est utilisé un algorithme de max-min prenant en compte la qualité de liaison sur la liaison entre le noeud considéré et le noeud de rang un, et la qualité de liaison sur la liaison entre le noeud de rang un et le noeud de rang deux.

Au cours du créneau de communication source S2, d'une durée de 34 ms par exemple, un noeud fonctionnant en tant que noeud source peut émettre un message de communication source vers un noeud relais.

Le message de communication source comporte les données utiles à transmettre au noeud destinataire final, ainsi qu'un identifiant du noeud destinataire à deux bonds 13 et un identifiant du ou de chaque noeud relais à un bond, 11 ou 12, devant relayer les données utiles vers ce noeud destinataire. Il est à noter que l'adressage peut être assurée en adressant de façon explicite chacun des destinataires du message de données, ou une en adressant le message à un groupe de noeuds, qui identifie plusieurs destinataires qui vont se reconnaître.

Au cours du créneau de communication relais S3, d'une durée de 35 ms par exemple, un noeud fonctionnant en relais, tel que les noeuds 11 et 12, peut émettre un message de communication relais.

Chaque message de communication relais, durant un premier sous-créneau de 1 ms par exemple, une portion d'en-tête intégrant un motif caractéristique du noeud relais émetteur, permettant au noeud destinataire de calculer une phase pour ce noeud relais émetteur. Chaque message de communication relais comporte, durant un second sous-créneau de 34 ms par exemple, une portion de charge utile comportant les données utiles à relayer vers le noeud destinataire 13.

Au cours du créneau d'ajustement S4, d'une durée de 15 ms par exemple, un noeud destinataire, tel que le noeud 13, peut envoyer un message d'ajustement vers un noeud relais duquel il a reçu un message de communication relais. Le message d'ajustement comporte un identifiant de ce noeud relais et un déphasage Δϕ.

On notera que le créneau S4 ainsi que le sous créneau de 1 ms de S3 ne sont utiles que pour le mode de fonctionnement en formation de faisceau 300 qui sera décrit ci-dessous.

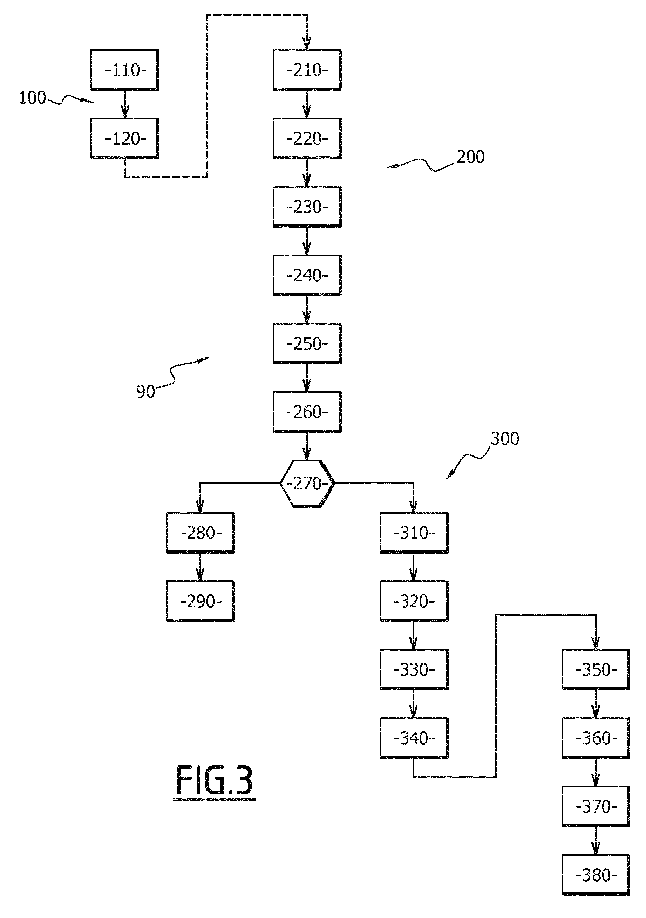

Chaque noeud est propre à mettre en oeuvre le procédé 90 de la figure 3.

Le procédé 90 comporte un algorithme de découverte de voisinage 100 permettant à la couche MAC d'un noeud de découvrir son environnement.

Plus spécifiquement, à l'étape 110, chaque noeud émet, dans le créneau de signalisation S1, un message de signalisation comportant les informations de signalisation indiquées précédemment.

A l'étape 120, la couche MAC d'un noeud récepteur d'un message de signalisation met à jour sa liste avec les informations contenues dans ce message de signalisation. En particulier, sur la base de la séquence de Walsh au début du message de signalisation, le noeud récepteur détermine la qualité de la liaison avec le noeud émetteur du message de signalisation. Grâce à la liste, chaque noeud connaît non seulement son voisinage à un bond, mais également son voisinage à deux bonds.

Certaines des informations contenues dans la liste sont éventuellement transmises sur le réseau 1 vers le noeud 16 relié au dispositif de mise à jour de la table de routage. Cependant, elles sont transmises avec une échelle temporelle plus grande (fréquence plus faible), toutes les 100 ms par exemple, (pour minimiser la charge liée à la mise à jour de la table de routage sur le réseau.

Cependant, les mécanismes de découverte du type de routage mis en oeuvre sont généralement indépendants et effectués séparément à une échelle temporelle plus grande.

La table de routage locale stockée par la couche de routage d'un noeud est ainsi rafraîchie périodiquement. La table de routage locale d'un noeud est construite de manière à indiquer au noeud considéré les deux prochains noeuds sur le chemin de routage vers un destinataire final.

Entre deux instants de mise à jour du routage, un groupe de noeuds met en oeuvre les étapes de retransmission 200 du procédé 90. Dans ce qui suit, ces étapes sont illustrées par le groupe constitué des noeuds 10, 11, 12 et 13.

La retransmission d'un message par le noeud source 10, vers un noeud relais de rang un tient compte du chemin de routage indiqué par table de routage locale et éventuellement d'une correction au chemin de routage indiqué par la table de routage locale.

Ainsi, à l'étape 210, la couche MAC du noeud source 10 reçoit un message de données. La couche MAC noeud source 10 extrait l'identifiant du noeud destinataire final du message de données reçu.

A l'étape 220, si l'identifiant du noeud destinataire final n'est pas l'identifiant du noeud source 10, la couche MAC du noeud source 10 interroge la couche de routage, afin de connaître l'identifiant du noeud à un saut et l'identifiant du noeud à deux sauts du chemin de routage.

A l'étape 230, en consultant la table de routage local, la couche de routage identifie le chemin de routage menant du noeud source au destinataire final et extrait l'identifiant du noeud à un saut et l'identifiant du noeud à deux sauts, lorsque celui-ci existe (hypothèse implicitement faite pour la mise en oeuvre du présent procédé). Ainsi, pour acheminer un message de données vers le noeud destinataire final 15, la couche de routage du noeud source 10 identifie, sur le chemin de routage défini par la table de routage locale, le noeud de rang un 11 et le noeud de rang deux 13. Ces deux identifiants sont passés par la couche de routage à la couche MAC.

A l'étape 240, sur la base de l'identifiant du noeud à deux sauts pris comme noeud destinataire, la couche MAC consulte la liste et identifie les noeuds de rang un qui peuvent permettre de relayer un message de données vers le noeud destinataire. Ainsi, le noeud source 10 identifie le premier noeud relais 11 et le second noeud relais 12 comme permettant d'atteindre le noeud destinataire 13.

A l'étape 250, pour chacun de ces noeuds relais de rang un, la couche MAC du noeud source calcule la qualité de la communication du chemin élémentaire permettant de passer du noeud source au noeud destinataire, via le noeud de rang un considéré.

La qualité de communication le long d'un chemin élémentaire est évaluée en tenant compte de la qualité de la liaison entre le noeud source et le noeud de rang un considéré, ainsi que de la qualité de la liaison entre le noeud de rang un considéré et le noeud de rang deux destinataire. Les qualités de liaison sont indiquées dans la liste de la couche MAC du noeud source.

A l'étape 260, la couche MAC du noeud source applique un premier critère pour sélectionner un chemin élémentaire. Par exemple, ce premier critère consiste à sélectionner le chemin élémentaire présentant la meilleure qualité de communication parmi les différents chemins élémentaires permettant d'atteindre le noeud destinataire. La couche MAC retient l'identifiant du noeud relais de rang un associé au chemin élémentaire sélectionné comme identifiant du noeud intermédiaire vers lequel retransmettre le message de données. Par exemple, si la qualité de la communication le long du second chemin élémentaire passant par le second noeud relais 12 est meilleure que la qualité de la communication le long du premier chemin élémentaire passant par le premier noeud relais 11, le noeud source 10 retient l'identifiant du second noeud relais 12 comme noeud relais intermédiaire vers lequel retransmettre le message de données vers le noeud destinataire 13.

A l'étape 270, un second critère est vérifié sur le niveau de la qualité de communication le long du chemin élémentaire sélectionné.

Par exemple et de préférence, le second critère consiste à vérifier si la qualité de la liaison entre le noeud relais retenu et le noeud destinataire est supérieure à un seuil haut prédéterminé (dépendant des paramètres de fonctionnement radio de l'antenne dont sont équipés les noeuds). En variante, d'autres premier et second critères peuvent être mise en oeuvre. Le premier critère pourrait également être identique au second critère.

Si ce second critère est vérifié, à l'étape 280, le noeud source 10 émet un message de communication source vers le noeud relais intermédiaire retenu, en l'occurrence le second noeud relais 12. Ce message de communication source est transmis dans le créneau S2. Le message de communication source comporte, en plus de la donnée utile, l'identifiant du noeud relais 12 et l'identifiant du noeud destinataire 13, afin que le noeud relais 12 sache vers quel noeud retransmettre les données utiles.

A l'étape 290, le message de communication relais est transmis, par le noeud relais 12 vers le noeud destinataire 13. Ce message de communication relais est transmis dans le créneau S3. Il comporte, dans sa portion de charge utile, la donnée utile à acheminer vers le destinataire final. Le noeud relais ne consulte pas sa table de routage étant donné que le noeud source impose, dans le message de communication source le noeud destinataire.

En revanche, si le second critère n'est pas vérifié et que la qualité de la liaison entre le voisin de rang un et le voisin de rang deux du chemin élémentaire sélectionné est inférieure ou égale au seuil haut, la couche MAC du noeud source 10 passe dans un mode de fonctionnement en formation de faisceau, de manière à ce que les étapes référencées par le chiffre 300 sur la figure 3 soient réalisées.

La formation de faisceau consiste à utiliser un ensemble de noeuds relais de rang un pour retransmettre simultanément vers un même noeud destinataire des messages communication relais dont les portions de charge utile sont identiques et comportent la donnée utile. Pour que les portions de charge utile des signaux émis par les différents noeuds relais interfèrent de manière constructive au niveau du noeud destinataire, il est nécessaire, en plus de la synchronisation du créneau S3, d'ajuster la phase et éventuellement d'ajuster la fréquence de ces signaux.

Plus spécifiquement, à l'étape 310, la couche MAC du noeud source 10 extrait un ensemble de noeuds relais de rang un de la liste. Par exemple, ne sont pas retenus les noeuds relais de rang un correspondant à un chemin élémentaire dont la qualité de communication est inférieure à un seuil bas, prédéterminé. L'ensemble de noeuds relais regroupe les noeuds relais de rang un utilisés pour former le faisceau vers le noeud de rang deux, destinataire. Ici, l'ensemble de noeuds relais comporte les premier et second noeuds relais 11 et 12.

A l'étape 320, le noeud source 10 transmet, dans le créneau S2, un message de communication source vers chacun des noeuds relais de l'ensemble de noeuds relais. Ce message comporte les identifiants des différents noeuds relais de rang un de l'ensemble de noeuds relais ainsi que l'identifiant du noeud de rang deux destinataire. La partie de charge utile de ce message comporte les données utiles à destination du noeud destinataire final 15.

A l'étape 330, chacun des noeuds relais, 11 et 12, ayant reçu le message de communication source du noeud source 10, émet, dans le créneau S3, un message de communication relais vers le noeud destinataire 13. En particulier, le message de communication relais incorpore une portion d'en-tête comportant par exemple une séquence de Walsh spécifique du noeud relais émetteur, 11 ou 12, ainsi qu'une portion de charge utile avec la donnée utile à transmettre. Là encore, le noeud relais ne consulte pas sa table de routage étant donné que le noeud source impose, dans le message de communication source le noeud destinataire. Le relayage de la donnée utile s'effectue donc essentiellement au niveau MAC du noeud relais.

A l'étape 340, le noeud destinataire 13 reçoit des messages de communication relais dans le créneau temporel S3. Il retransmet normalement la donnée utile vers le noeud relais suivant le long du chemin de routage vers le noeud destinataire final 15.

Pour réduire les interférences entre les signaux des noeuds relais de l'ensemble des noeuds relais utilisés pour former le faisceau, le noeud destinataire 13 analyse les séquences de Walsh des portions d'en-tête des messages de communication relais reçus. Le noeud relais est ainsi propre à mesurer, pour chaque noeud relais, une phase ϕ du signal émis par ce noeud relais. La manière de calculer la phase à partir d'une information telle qu'une séquence de Walsh est connue de l'homme du métier.

A l'étape 350, le noeud destinataire 13 sélectionne un noeud relais parmi les noeuds de l'ensemble des noeuds relais utilisés pour former le faisceau en tant que noeud relais maître (par exemple le noeud relais 11). Les autres noeuds de l'ensemble des noeuds relais utilisés pour former le faisceau sont alors dits noeuds esclaves (par exemple le noeud 12). Pour chacun des noeuds esclave, le noeud destinataire 13 calcule un déphasage Δϕ par différence entre la phase ϕ mesurée pour le noeud esclave considéré et la phase ϕ mesurée pour le noeud maître. Le noeud destinataire 13 calcule ainsi un déphasage Δϕ pour le noeud relais 12.

A l'étape 360, le noeud destinataire 13 transmet, dans le créneau temporel S4, un message d'ajustement à chacun des noeuds esclaves de l'ensemble des noeuds relais utilisés pour former le faisceau, ce message d'ajustement comportant le déphasage Δϕ calculé pour ce noeud esclave. Ainsi, le noeud destinataire 13 transmet le déphasage Δϕ au noeud relais 12

A l'étape 370, le noeud relais 12, ayant reçu un message d'ajustement dans le créneau d'ajustement S4, ajuste la phase de son module d'émission-réception pour annuler le déphasage Δϕ indiqué par le noeud destinataire 13. Cet ajustement s'effectue au début du créneau S3 de la trame suivante.

Ainsi, lors de l'émission d'un message de communication relais dans le créneau S3 de la trame suivante, les différents noeuds relais de l'ensemble des noeuds relais utilisés pour former le faisceau seront en phase, (à condition que les positions relatives des noeuds relais et destinataire n'aient pas trop évoluées entre temps), de sorte que les interférences entre les signaux qu'ils émettent seront réduites. La transmission vers le noeud destinataire sera donc meilleure que celle le long du chemin élémentaire prévu par le routage.

Avantageusement, à l'étape 380, un noeud esclave corrige la dérive en fréquence de son module d'émission-réception. Par exemple, le second noeud relais 12 calcule une variation temporelle du déphasage Δϕ calculé par le noeud destinataire 13. Pour ce faire, le noeud relais 12 mémorise le déphasage Δϕ transmis par le noeud destinataire 13 à chaque trame. En divisant la différence entre deux déphasages Δϕ successifs par la durée Δt d'une trame, le noeud relais 12 détermine une dérive de fréquence Δf. Dans le créneau de communication relais S3, le noeud relais 12 ajuste alors dynamiquement la fréquence de fonctionnement de son module d'émission-réception pour compenser cette dérive de fréquence. Ainsi, si l'ajustement de la phase permet de réduire les interférences au début de chaque créneau de communication relais S3, la correction de la fréquence permet de maintenir cette réduction des interférences tout au long du créneau de communication relais S3.

Les différents noeuds relais de l'ensemble des noeuds relais utilisés pour former le faisceau seront ainsi en phase non seulement au début mais tout au long du créneau de communication relais S3. La transmission vers le noeud destinataire sera encore améliorée.

En variante, le procédé de correction du routage ne comporte que l'étape de sélection du noeud relais se trouvant sur le chemin élémentaire présentant la meilleure qualité de communication. Si ce noeud relais est différent du noeud relais indiqué par le routage, il se substitue à ce dernier et le message de données est relayé uniquement par ce noeud de rang un de substitution. Ainsi, l'utilisation d'un autre noeud relais que celui indiqué par le routage permet localement d'améliorer la communication.

Dans une autre variante, le procédé de correction du routage ne comporte que la formation de faisceau dès que la qualité de communication sur le chemin élémentaire passant par le noeud relais indiqué par le routage est insuffisante. L'utilisation du noeud relais différent du noeud relais indiqué par le routage vient alors renforcer le relayage vers le noeud destinataire, les différents noeuds relais fonctionnant simultanément. Ainsi, l'utilisation d'un autre noeud relais que celui indiqué par le routage permet localement d'améliorer la communication.

Il est à noter que dans la formation de faisceau mise en oeuvre dans le présent procédé, c'est le noeud destinataire qui pilote l'ajustement des noeuds relais utilisés. Il n'y a aucune communication entre les noeuds relais entre eux.

Il est également à noter qu'à l'instant considéré, le noeud relais indiqué par le routage peut ne plus être dans le voisinage du noeud source considéré. Ainsi, la mise en oeuvre du procédé permet, lorsqu'une telle situation survient, de ne pas interrompre la communication en cours entre le noeud source initiale et le noeud destinataire final.

Enfin, la formation de faisceau présente l'avantage d'augmenter la portée de la communication vers le noeud destinataire. Par conséquent, la communication est moins sensible à l'éloignement du noeud destinataire du noeud relais indiqué par le routage.

L'homme du métier constatera que dans le présent procédé, un noeud sur deux le long d'un chemin de routage donné peut être considéré comme noeud source et que les noeuds de rang un d'un noeud source comme noeuds relais. La correction éventuelle du chemin de routage s'effectue au niveau des noeuds relais du chemin de routage considéré.

Cependant, tous les deux sauts, le procédé prévoit de revenir sur le chemin de routage prédéfini. Il ne peut donc pas y avoir de divergence qui conduirait le message de données à s'écarter progressivement du chemin de routage.

La correction du chemin de routage est transparente pour la couche de routage des noeuds. En particulier, les informations de voisinage à un bon et à deux bons d'un noeud source ne sont pas retransmises à chaque modification vers la couche de routage dans l'attente d'une mise à jour de la table de routage locale. Le procédé selon l'invention allège donc le routage : la quantité d'information de signalisation pour la mise à jour du routage à propager sur le réseau est réduite ; la durée de validité d'une table de routage est augmentée. La bande passante est donc allouée à la transmission de données utiles.

## Revendications

1. Procédé (90) de correction locale du chemin de routage dans un réseau ad hoc (1) comportant une pluralité de noeuds, chaque noeud comportant des moyens émetteurs-récepteurs propres à recevoir et émettre des messages de données, les noeuds communiquant entre eux par l'envoi de signaux correspondant auxdits messages de données dans des créneaux temporels (S1, S2, S3, S4) organisés en trames, les trames étant synchronisée à travers le réseau ad hoc, un routage des messages de données étant effectué à travers le réseau ad hoc sur la base d'une table de routage définissant un chemin de routage pour la communication entre chaque paire de noeud du réseau, **caractérisé en ce que** ledit procédé est mis en oeuvre dans un groupe de noeuds du réseaux ad hoc comportant un noeud source (10), au moins des premier et second noeuds relais (11, 12), et un noeud destinataire (13), les premier et second noeuds relais étant voisins du noeud source, le noeud destinataire étant voisin des premier et second noeuds relais mais n'étant pas voisin du noeud source, le noeud source ayant des données utiles à retransmettre vers un destinataire final (15) et la table de routage indiquant que le chemin de routage correspondant passe par le premier noeud relais (11), puis par le noeud destinataire (13),
et **en ce que** ledit procédé comportant les étapes de :
- calcul (250), par le noeud source (10), d'une grandeur caractéristique d'un chemin élémentaire entre le noeud source (10) et le noeud destinataire (13), via le premier noeud relais (11) et d'une grandeur caractéristique d'un chemin élémentaire entre le noeud source (10) et le noeud destinataire (13), via le second noeud relais (11) ;
- vérification (270), par le noeud source (10), du respect d'un critère prédéterminé pour ladite grandeur caractéristique du chemin élémentaire entre le noeud source et le noeud destinataire, via le premier noeud relais ; et, en cas de vérification négative,
- utilisation du second noeud relais (12) pour relayer les données utiles du noeud source (10), vers le noeud destinataire (13).

2. Procédé selon la revendication 1, dans lequel, au cours d'un créneau de signalisation (S1) de chaque trame, chaque noeud a la possibilité d'émettre un message de signalisation comportant des informations de signalisation, les informations de signalisation permettant à chaque noeud de déterminer ses noeuds voisins de rang un, une qualité de liaison avec chacun de ses noeuds voisins de rang un, ses noeuds voisins de rang deux, et une qualité de liaison entre un noeud voisins de rang un et un noeud voisin de rang deux, les qualités de liaison permettant, dans l'étape de calcul (250), à un noeud source (10) de déterminer une qualité de communication.

3. Procédé selon la revendication 1 ou la revendication 2, dans lequel l'étape d'utilisation du second noeud relais (12) consiste à relayer les données utiles vers le noeud destinataire (13) à la fois par le chemin élémentaire entre le noeud source (10) et le noeud destinataire (13), via le premier noeud relais (11), et par le chemin élémentaire entre le noeud source (10) et le noeud destinataire (13), via le second noeud relais (12).

4. Procédé selon la revendication 3, dans lequel l'étape d'utilisation du second noeud relais (12) met en oeuvre un mode de fonctionnement en formation de faisceau, dans lequel des premier et second messages de communication relais, émis respectivement par les premier et second noeuds relais, interfèrent de manière constructive au niveau du noeud destinataire (13), au moins dans leurs portions respectives de charge utile comportant les données utiles à retransmettre, les premier et second messages de communication relais étant émis pendant un créneau de communication relais (S3) dédié de la trame.

5. Procédé selon la revendication 4, dans lequel le noeud destinataire (13) :
- mesure une phase (ϕ) d'un signal émis par un noeud relais (11, 12) à partir d'un motif, caractéristique du noeud relais émetteur, prévus dans une portion d'en-tête du message de communication relais ;
- choisi l'un des noeuds relais en tant que noeuds relais maître ;
- calcule pour chacun des autres noeuds relais, dits esclaves, un déphasage (Δϕ) résultant de la différence entre la phase mesurée pour le noeud relais esclave considéré et la phase mesurée pour le noeud relais maître ; et,
- transmet le déphasage calculé vers le noeud relais esclave correspondant dans un message d'ajustement émis dans un créneau d'ajustement (S4) dédié de la trame,
et dans lequel un noeud relais (12) ayant reçu un message d'ajustement ajuste une phase de ses moyens d'émission-réception de manière à annuler le déphasage indiqué dans ledit message d'ajustement.

6. Procédé selon la revendication 5, dans lequel chaque noeud relais (12) est propre à calculer une dérive en fréquence de ses moyens d'émission-réception à partir du déphasage contenu dans une succession de messages d'ajustement émis par un même noeud destinataire (13) et à ajuster la fréquence de ses moyens d'émission-réception de manière à corriger ladite dérive en fréquence, au moins au cours du créneau de communication relais (S3) pour la transmission d'un message de communication relais vers ledit noeud destinataire.

7. Procédé selon la revendication 1 ou la revendication 2, dans lequel, la grandeur caractéristique étant une qualité de communication le long d'un chemin élémentaire, le critère prédéterminé consiste à vérifier que la grandeur caractéristique du chemin élémentaire entre le noeud source (10) et le noeud destinataire (13), via le premier noeud relais (11), qui est le noeud relais indiqué par la table de routage, est supérieure à la grandeur caractéristique du chemin élémentaire entre le noeud source (10) et le noeud destinataire (13), via le second noeud relais (12), l'étape d'utilisation du second noeud relais consistant à relayer les données utiles vers le noeud destinataire (13) uniquement par le second noeud relais (12), en substitution du premier noeud relais (11).

8. Réseau ad hoc (1) comportant une pluralité de noeuds propres à recevoir et à émettre des messages de données et communiquant entre eux par l'envoi de signaux dans des créneaux temporels organisés en trames, **caractérisé en ce que** chaque noeud comporte des moyens pour la mise en oeuvre du procédé (90) selon l'une quelconque des revendications précédentes.

9. Réseau selon la revendication 8, dans lequel les trames comportent :
- Un créneau de signalisation (S1), permettant à chaque noeud d'émettre un signal de signalisation comportant des informations de signalisation, les informations de signalisation permettant à chaque noeud de déterminer ses noeuds voisins de rang un, une qualité de liaison avec chacun de ses noeuds voisins de rang un, ses noeuds voisins de rang deux, et une qualité de liaison entre chaque noeud de rang un et chaque noeud de rang deux ;
- Un créneau de communication source (S2), permettant à un noeud fonctionnant en tant que noeud source d'émettre un message de communication source vers un noeud de rang un fonctionnant en tant que noeud relais, le message de communication source comportant les données utiles à transmettre vers un destinataire final ;
- Un créneau de communication relais (S3), permettant à un noeud fonctionnant en noeud relais d'émettre un message de communication relais vers un noeud destinataire, le message de communication relais comportant une portion d'en-tête intégrant un motif, caractéristique du noeud relais émetteur, permettant au noeud destinataire de calculer une phase du signal correspondant au message de communication relais, et une portion de charge utile comportant les données utiles à relayer vers le noeud destinataire; et,
- Un créneau d'ajustement (S4), permettant à au noeud fonctionnant en noeud destinataire d'émettre un message d'ajustement vers un noeud relais d'un ensemble de noeuds relais utilisés dans un mode de formation de faisceau, le message d'ajustement comportant un déphasage.

10. Réseau selon la revendication 8 ou la revendication 9, dans lequel chaque noeud destinataire (13) d'une pluralité de messages de communication relais émis par des noeuds relais (11, 12) d'un ensemble de noeuds relais utilisés dans un mode de formation de faisceau, est propre à calculer une phase (ϕ) pour chacun desdits noeuds relais à partir du signal correspondant au message de communication relais incident, à déterminer un déphasage entre au moins deux desdits noeuds relais et à transmettre le déphasage calculé à l'un desdits au moins deux noeuds relais, dans un message d'ajustement émis dans un créneaux d'ajustement (S4) dédié de la trame.

11. Réseau selon la revendication 10, dans lequel chaque noeud fonctionnant en noeud relais est propre à estimer une dérive en fréquence de ses moyens d'émission-réception à partir du déphasage contenu dans une succession de messages d'ajustement émis par un même noeud destinataire (13) et à ajuster ses moyens d'émission-réception pour corriger ladite dérive.

12. Réseau selon l'une quelconque des revendications 8 à 11, dans lequel la table de routage d'un noeud comporte, pour chaque destinataire (15) de données utiles, le noeud voisin de rang un du noeud considéré et le noeud voisin de rang deux du noeud considéré le long du chemin de routage.
